# EUROPÄISCHE PATENTANMELDUNG

(11) **EP 1 808 506 A1**
(43) Veröffentlichungstag der Anmeldung: **18.07.2007**
(21) Anmeldenummer: 06000915.6
(22) Anmeldetag: 17.01.2006
(51) Int. Cl.: C23C 4/00, F01D 5/00, F01D 5/28, B05B 15/04

(54) **Verfahren zum Behandeln von Werkstücken mittels einer chemischen Substanz**

(71) Anmelder: SIEMENS AKTIENGESELLSCHAFT, 80333 München (DE)
(72) Erfinder: Krüger, Ursus, Dr., 14089 Berlin (DE); Pyritz, Uwe, 13599 Berlin (DE); Reiche, Ralph, 13465 Berlin (DE); Winkler, Gabriele, 13587 Berlin (DE)

(57) **Zusammenfassung**

Die Erfindung betrifft ein Verfahren zum Behandeln von Werkstücken (1), insbesondere von Turbinenschaufeln, mittels einer chemischen Substanz, gegebenenfalls in einem elektrochemischen Bad, bei dem das Werkstück (1) vor der Behandlung mit der chemischen Substanz an den Stellen, die vor der Substanz geschützt werden sollen, mit einer Schutzschicht (13, 14, 15) versehen wird, die nach der Behandlung entfernt wird. Erfindungsgemäß wird für die Schutzschicht eine Schutzfolie (13, 14, 15) aus einem Material verwendet, das gegen die chemische Substanz beständig ist, und dass die Schutzfolie (13, 14, 15) auf das Werkstück (1) aufgelegt und zumindest im Bereich ihrer Ränder eine lückenlose Haftverbindung mit dem Werkstück (1) hergestellt wird.

## Beschreibung

Die Erfindung betrifft ein Verfahren zum Behandeln von Werkstücken, insbesondere von Turbinenschaufeln, mittels einer chemischen Substanz, gegebenenfalls in einem elektrochemischen Bad, bei dem das Werkstück vor der Behandlung mit der chemischen Substanz an den Stellen, die vor der Substanz geschützt werden sollen, mit einer Schutzschicht versehen wird, die nach der Behandlung entfernt wird.

Insbesondere metallische Werkstücke werden zu verschiedenen Zwecken mit chemischen Substanzen behandelt. Hochbelastete Werkstücke wie beispielsweise für Turbinen, insbesondere für Gasturbinen, bestimmte Turbinenschaufeln werden zur Verbesserung ihrer Temperatur- und/oder Abrasionsfestigkeit mit hierfür geeigneten Metallen, Metalllegierungen oder Keramiken beschichtet, beispielsweise mittels atmosphärischem Plasmasprühen (APS) oder Hochgeschwindigkeits-Sauerstoff-Brennstoff-Sprühen (HVOF) (Ullmann's Encyclopedia of Industrial Chemistry, 2003, Band 21, Seiten 572 und 573). Dabei werden allerdings nur diejenigen Oberflächen beschichtet, die dem durchströmenden Medium ausgesetzt sind. Dies sind im Wesentlichen die von dem Schaufelblatt der Turbinenschaufel gebildeten Oberflächen. Die anderen Oberflächen, wie der Schaufelfuß und bei Leitschaufeln auch die Plattform an der Schaufelspitze, bleiben beschichtungsfrei.

Ebenfalls frei gehalten werden müssen innerhalb der Turbinenschaufel verlaufende Kühlkanäle. Solche Kühlkanäle werden insbesondere bei Gasturbinenschaufeln vorgesehen. Hierzu wird Luft über Öffnungen im Schaufelfuß in das Schaufelblatt eingeleitet und kann über so genannte Filmkühllöcher an bestimmten Stellen des Schaufelblatts austreten, so dass dort eine als eine Isolierschicht wirkende Luftschicht entsteht (vgl. DE 692 10 892 T2, DE 36 42 789 A1 und DE 694 20 582 T2).

Sofern eine Beschichtung fehlerhaft aufgebracht ist oder eine beanspruchte Beschichtung durch eine neue ersetzt werden soll, ist es erforderlich, die Beschichtung mit Hilfe einer geeigneten chemischen Substanz, gegebenenfalls in einem elektrochemischen Bad, zu entfernen. Dabei müssen jedoch die beschichtungsfreien Oberflächen - insbesondere Schaufelfuß und Kühlkanäle - vor dem Angriff durch die chemische Substanz bzw. den Elektrolyten geschützt werden. Hierzu werden die Oberflächen mit einer Schutzschicht aus Wachs versehen, indem die Oberflächen des Werkstückes mehrfach mit Wachs eingestrichen werden oder das Werkstück in ein Wachsbad getaucht wird. Nach Entfernen der metallischen bzw. keramischen Beschichtung durch Angriff der chemischen Substanz wird das Wachs verflüssigt und anschließend ausgebrannt. Das Entfernen des Wachses kann bis zu drei Stunden dauern.

Daneben ist es bekannt, vor allem metallische Werkstücke chemisch oder elektrochemisch zu beschichten, indem die chemische Substanz, beispielsweise Metalle, Polymere, Keramiken oder der gleichen, auf dem Werkstück abgeschieden werden (Ullmann's Encyclopedia of Industrial Chemistry, 2003, Band 36, Seiten 541 bis 549). Auch in diesen Fällen ist es für bestimmte Werkstücke, beispielsweise Turbinenschaufeln, erforderlich, diejenigen Stellen abzudecken, die nicht beschichtet werden sollen. Gleiches gilt für das chemische und elektrochemische Reinigen und Polieren von Werkstücken.

Der Erfindung liegt die Aufgabe zugrunde, ein Verfahren bereitzustellen, mit dem eine Schutzschicht zwecks Abdeckung von nicht zu behandelnde Oberflächen wesentlich einfacher und schneller aufgebracht und nach der Behandlung wieder entfernt werden kann.

Diese Aufgabe wird erfindungsgemäß dadurch gelöst, dass für die Schutzschicht eine Schutzfolie aus einem Material verwendet wird, dass gegen die chemische Substanz, mit der das Werkstück behandelt wird, beständig ist, und dass die Schutzfolie auf das Werkstück aufgelegt und zumindest im Bereich ihrer Ränder eine lückenlose Haftverbindung zu dem Werkstück hergestellt wird. Es versteht sich, dass dann, wenn mehrere, voneinander getrennten Oberflächen abgedeckt werden müssen, auch eine entsprechende Anzahl von Schutzfolien verwendet wird.

Grundgedanke der Erfindung ist es, eine Schutzfolie zu verwenden, welche für die jeweils verwendete chemische Substanz beständig ist. Solche Schutzfolien können aus einem Kunststoff bestehen, beispielsweise PE, PP oder PTFE. Sie lassen sich auf einfache Weise durch Beschneiden an die jeweils abzudeckende Oberfläche anpassen und dann auflegen, wobei es zur Erfindung gehört, dass die Herstellung der Haftverbindung im Randbereich lückenlos ist, so dass die verwendete chemische Substanz nicht zwischen Werkstück und Schutzfolie eindringen kann. Das Entfernen der Schutzfolie kann durch einfaches Abziehen geschehen. Mit Hilfe des erfindungsgemäßen Verfahrens lassen sich die Zeiten für die Vorbereitung und Nachbehandlung von Werkstücken wesentlich reduzieren, wodurch Kosten gespart werden.

Das erfindungsgemäße Verfahren lässt sich auf alle vorbeschriebenen Verfahren zur Behandlung von Werkstücken anwenden, soweit die Temperaturen bei der Behandlung des Werkstücks nicht zu hoch sind, im wesentlichen unter Hundert Grad Celsius liegt. Das Verfahren eignet sich vor allem zum Abtragen von auf dem Werkstück vorhandenen Beschichtungen, zur Reinigung und/oder Polierung des Werkstückes oder auch zu deren chemischer bzw. elektrochemischer Beschichtung.

Die Herstellung der Haftverbindung kann mittels Klebstoff geschehen, wobei sich hierfür die Anbringung eines druckempfindlichen Haftklebers auf der Schutzfolie empfiehlt. Alternativ dazu kann vorgesehen sein, die Haftverbindung durch Aufladen der Schutzfolie und/oder des Werkstücks mit statischer Elektrizität herzustellen. In beiden Fällen ist das Aufbringen der Schutzfolie und auch deren Entfernung nach der Behandlung des Werkstücks einfach und erfordert nur geringen Zeitaufwand.

Nach einem weiteren Merkmal der Erfindung ist vorgesehen, dass die Haftverbindung nur im Bereich der Ränder der Schutzfolie hergestellt wird und dass der davon eingeschlossene Bereich mit Vakuum beaufschlagt wird. Diese Verfahrensweise eignet sich insbesondere dann, wenn das Werkstück Kanäle mit Öffnungen zur Außenseite des Werkstückes hat, die dann mittels einer Schutzfolie oder mehreren davon abgedeckt werden. Vor allem, wenn das Werkstück Durchgangskanäle hat, die in Öffnungen des Werkstücks enden, ist die Beaufschlagung mit Vakuum zweckmäßig. Dies kann dann in der Weise geschehen, dass die Öffnungen auf beiden Seiten der Durchgangskanäle mit Schutzfolien abgedeckt werden, wobei die Durchgangskanäle über jeweils einen Anschluss an der Schutzfolie auf einer Seite der Durchgangskanäle mit Vakuum beaufschlagt werden. Auf dieser Weise ist gesichert, dass die chemische Substanz, die bei der Behandlung des Werkstückes eingesetzt wird, nicht in die Durchgangskanäle eindringen und die Öffnungen nicht verschließen kann.

Die Entfernung der Schutzfolie(n) nach der Behandlung des Werkstückes kann je nach Art der Befestigung der Schutzfolie mechanisch, thermisch oder unter Anwendung eines Sauerstoffsplasmas geschehen. Die mechanische Entfernung kann beispielsweise durch Abziehen vorgenommen werden. Bei der thermischen Entfernung wird die Schutzfolie verbrannt.

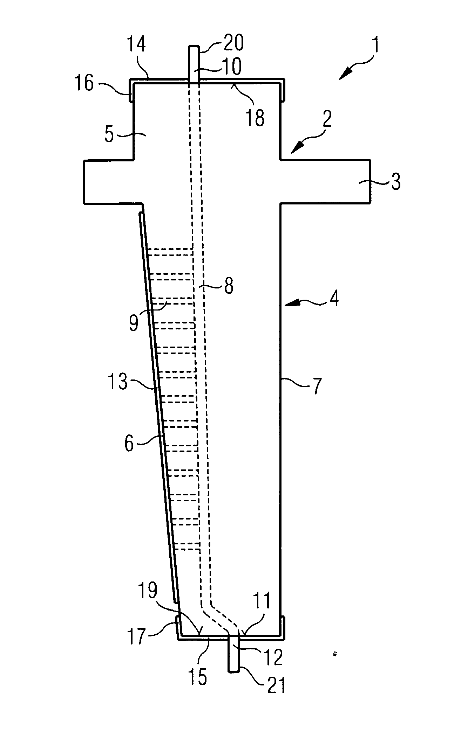

In der Zeichnung ist die Erfindung an Hand eines Ausführungsbeispiels näher veranschaulicht. Sie zeigt eine Draufsicht auf eine Laufschaufel 1 einer Strömungsmaschine. Die Strömungsmaschine kann eine Gasturbine eines Flugzeugs oder zur Elektrizitätserzeugung, eine Dampfturbine oder ein Kompressor sein.

Die Laufschaufel 1 weist entlang ihrer Längsachse aufeinander folgend einen Befestigungsbereich 2, daran angrenzend eine Schaufelplattform 3 sowie ein Schaufelblatt 4 auf. Im Befestigungsbereich 2 wird ein Schaufelfuß 5 gebildet, der zur Befestigung der Laufschaufel 1 an einer Welle oder einer Scheibe dient (nicht dargestellt). Der Schaufelfuß 5 kann beispielsweise als Hammerkopf, Tannenbaum- oder Schwalbenschwanzfuß ausgestaltet sein. Die Laufschaufel 1 weist für ein Medium, dass an dem Schaufelblatt 4 vorbeiströmt, eine Anströmkante 6 und eine Abströmkante 7 auf.

Parallel zur Längsachse der Laufschaufel 1 verläuft in deren Inneren ein zentraler Kühlluftkanal 8. Von diesem Kühlluftkanal 8 gehen zur Anströmkante 6 hin eine Vielzahl von Abzweigkanälen - beispielhaft mit 9 bezeichnet - ab, die in hier nicht dargestellten Austrittsöffnungen an der Anströmkante 6 enden. Der zentrale Kühlluftkanal 8 hat am Schaufelfuß 5 eine Eintrittsöffnung 10. Er geht bis zur Schaufelspitze 11 und hat dort eine Austrittsöffnung 12.

Das Schaufelblatt 4 ist mit einer Wärmedämmschicht versehen, beispielsweise aus ZrO₂ oder Y₂O₃-ZrO₂. Ist diese Wärmedämmschicht fehlerhaft ist oder ist sie durch Gebrauch teilweise abgetragen und entwickelt demgemäß nicht mehr die volle Wärmeschutzwirkung, wird die Wärmedämmschicht durch Eintauchen der Laufschaufel 1 in ein chemisches bzw. ein elektrochemisches Bad abgetragen, damit anschließend eine neue Wärmedämmschicht aufgetragen werden kann, beispielsweise mit Hilfe eines Plasmasprayverfahrens. Hierfür ist es notwendig, dass die chemische Substanz, die bei dem Abtragen der Wärmeschutzschicht zur Anwendung kommt, nicht in den Kühlluftkanal 8 bzw. die Abzweigkanäle 9 eindringt. Um dies zur vermeiden, werden die Austrittsöffnungen der Abzweigkanäle 9 mittels einer Schutzfolie 13 abgedeckt. Die Schutzfolie 13 ist entweder ganzflächig oder an ihren Rändern lückenlos mit einem druckempfindlichen Haftkleber versehen und haftet deshalb an dem Schaufelblatt 4 derart, dass Flüssigkeit nicht in die Abzweigkanäle 9 eindringen kann.

Auch der Schaufelfuß 5 und die Schaufelspitze 11 sind jeweils mit einer Schutzfolie 14, 15 abgedeckt. Diese Schutzfolien 14, 15 sind nur an ihren Rändern 16, 17 mit Klebstoff versehen und dichten somit die Bereiche 18, 19 gegen das Eindringen von Flüssigkeit ab. Da in diesen Bereichen 18, 19 die Eintrittsöffnung 10 bzw. die Austrittsöffnung 12 liegen, ist der Kühlluftkanal 8 vor der chemischen Substanz, mit der die Laufschaufel 1 behandelt werden soll, geschützt.

Die Schutzfolien 14, 15 am Schaufelfuß 5 und an der Schaufelspitze 11 sind zusätzlich mit Stutzen 20, 21 versehen. An diesen Stutzen 20, 21 können Schläuche angeschlossen werden, die zu einer Vakuumquelle führen. Auf diese Weise können die Bereiche 18, 19 und damit der Kühlkanal 8 und die Abzweigkanäle 9 während der Behandlung der Laufschaufel 1 zwecks Abtragen der Wärmedämmschicht mit Unterdruck beaufschlagt werden. Die Unterdruckbeaufschlagung verbessert die Abdichtung der Schutzfolien 13, 14, 15.

Nach Beendigung der Behandlung der Laufschaufel 1 können die Schutzfolien 13, 14, 15 dadurch entfernt werden, dass sie in einem Sauerstoffplasma oder thermisch verbrannt werden. Bei Verwendung entsprechender Klebstoffe können die Schutzfolien 13, 14, 15 auch abgezogen werden. Dies ist auch möglich, wenn das Anhaften der Schutzfolien 13, 14, 15 elektrostatisch erfolgt.

## Patentansprüche

1. Verfahren zum Behandeln von Werkstücken (1), insbesondere von Turbinenschaufeln, mittels einer chemischen Substanz, gegebenenfalls in einem elektrochemischen Bad, bei dem das Werkstück (1) vor der Behandlung mit der chemischen Substanz an den Stellen, die vor der Substanz geschützt werden sollen, mit einer Schutzschicht (13, 14, 15) versehen wird, die nach der Behandlung entfernt wird,
**dadurch gekennzeichnet, dass**
für die Schutzschicht eine Schutzfolie (13, 14, 15) aus einem Material verwendet wird, das gegen die chemische Substanz beständig ist, und
dass die Schutzfolie (13, 14, 15) auf das Werkstück (1) aufgelegt und zumindest im Bereich ihrer Ränder eine lückenlose Haftverbindung mit dem Werkstück (1) hergestellt wird.

2. Verfahren nach Anspruch 1,
**dadurch gekennzeichnet, dass**
zur Behandlung des Werkstückes (1) eine chemische Substanz verwendet wird, mit der eine auf dem Werkstück (1) vorhandene Beschichtung abgetragen wird.

3. Verfahren nach Anspruch 1,
**dadurch gekennzeichnet, dass**
zur Behandlung des Werkstückes (1) eine chemische Substanz verwendet wird, mittels der das Werkstück (1) gereinigt und/oder poliert wird.

4. Verfahren nach Anspruch 1,
**dadurch gekennzeichnet, dass**
durch die Behandlung des Werkstückes (1) mit der chemischen Substanz eine Beschichtung auf dem Werkstück (1) aufgebracht wird.

5. Verfahren nach einem der Ansprüche 1 bis 4,
**dadurch gekennzeichnet, dass**
die Schutzfolie (13, 14, 15) zumindest im Bereich ihrer Ränder aufgeklebt wird.

6. Verfahren nach Anspruch 5,
**dadurch gekennzeichnet, dass**
die Schutzfolie (13, 14, 15) mit einem druckempfindlichen Haftkleber versehen ist.

7. Verfahren nach einem der Ansprüche 1 bis 4,
**dadurch gekennzeichnet, dass**
die Haftverbindung durch Aufladen der Schutzfolie und/oder des Werkstücks mit statischer Elektrizität hergestellt wird.

8. Verfahren nach einem der Ansprüche 1 bis 7,
**dadurch gekennzeichnet, dass**
die Haftverbindung nur im Bereich der Ränder der Schutzfolie (13, 14, 15) hergestellt wird und dass der davon eingeschlossene Bereich mit Vakuum beaufschlagt wird.

9. Verfahren nach einem der Ansprüche 1 bis 8,
**dadurch gekennzeichnet, dass**
das Werkstück (1) Kanäle (8, 9) mit Öffnungen zur Außenseite des Werkstückes (1) hat und dass die Öffnungen durch eine Schutzfolie (13, 14, 15) abgedeckt werden.

10. Verfahren nach den Ansprüchen 7 bis 9,
**dadurch gekennzeichnet, dass**
das Werkstück (1) Durchgangskanäle (8, 9) hat, die in Öffnungen des Werkstücks (1) enden, und
dass die Öffnungen auf beiden Seiten der Durchgangskanäle (8, 9) mit Schutzfolien (13, 14, 15) abgedeckt werden, wobei die Durchgangskanäle (8, 9) über jeweils einen Anschluss (20, 21) an der Schutzfolie (13, 14, 15) auf einer Seite der Durchgangskanäle (8, 9) mit Vakuum beaufschlagt werden.

11. Verfahren nach einem der Ansprüche 1 bis 10,
**dadurch gekennzeichnet, dass**
eine Schutzfolie (13, 14, 15) aus PE, PP oder PTFE verwendet wird.

12. Verfahren nach einem der Ansprüche 1 bis 11,
**dadurch gekennzeichnet, dass**
die Schutzfolie(n) (13, 14, 15) nach der Behandlung mechanisch, thermisch und/oder mittels Sauerstoffplasma entfernt wird.
